Europäisches Patentamt

European Patent Office

Office européen des brevets

(11) Numéro de publication: **0 296 632**
**A2**

## (12) DEMANDE DE BREVET EUROPEEN

(21) Numéro de dépôt: **88110188.5**

(22) Date de dépôt: **27.06.88**

(51) Int. Cl.⁴: **G01F 11/34**

(30) Priorité: **25.06.87 US 68101**

(43) Date de publication de la demande:
**28.12.88 Bulletin 88/52**

(84) Etats contractants désignés:
**AT BE CH DE ES FR GB GR IT LI LU NL SE**

(71) Demandeur: **Tremblay, Roger**
**380 ouest, rue Salaberry**
**Mercier Québec J6R 2L1(CA)**

(72) Inventeur: **Tremblay, Roger**
**380 ouest, rue Salaberry**
**Mercier Québec J6R 2L1(CA)**

(74) Mandataire: **Bonnetat, Christian et al**
**Cabinet PROPI Conseils 23 rue de Léningrad**
**F-75008 Paris(FR)**

(54) **Dispensateur à poudre.**

(57) Dispositif pour distribuer une quantité prédéterminée de poudre à partir d'une chambre de storage (4, 5) et comprenant une chambre de mesure inférieure (65). La quantité de poudre délivrée à partir de la chambre de mesure (65) est rigoureusement constante pour chaque dose distribuée. Le volume de la chambre de mesure peut être ajusté avec précision grâce à une échelle calibrée 26. Le dispensateur comprend une paire de soupapes (58, 59) et une tige de poussée (46) commandant les soupapes, la soupape inférieure pouvant être fermée sous l'action de la gravité, la soupape supérieure pouvant être contrainte par un ressort en spirale unique 64 installé autour de la tige. Le ressort en spirale de contrainte est à l'abri sous un manchon par rapport aux deux chambres, de sorte que la poudre n'entre jamais en contact avec le ressort en spirale.

Fig. 3

## DISPENSATEUR A POUDRE

### DOMAINE DE L'INVENTION

Cette invention se rapporte à des dispositifs dispensateurs, et plus particulièrement à un dispensateur pour distribuer une quantité prédéterminée de poudre sèche à partir d'un contenant.

### ETAT DE LA TECHNIQUE

Un dispositif dispensateur pour des matériaux granulaires est montré par exemple dans le brevet américain # 2,852,170 concédé en 1958 à Edward Reynolds. Dans ce brevet, l'on prévoit une chambre de mesure et de chargement 10, et deux soupapes 17, 22 destinées à fermer de façon sélective les orifices d'admission et de sortie de la chambre de chargement. Les valves 17, 22 sont commandées par une tige de poussée 18, et contraintes par deux ressorts en spirale 25, 30 relativement à l'ouverture\fermeture des orifices de la chambre, le ressort 25 demeurant toujours dans la chambre 10 alors que le ressort 30 engagera habituellement en partie cette chambre. Le volume de la chambre de mesure 10 peut être ajusté en vissant ou dévissant l'orifice inférieur 31.

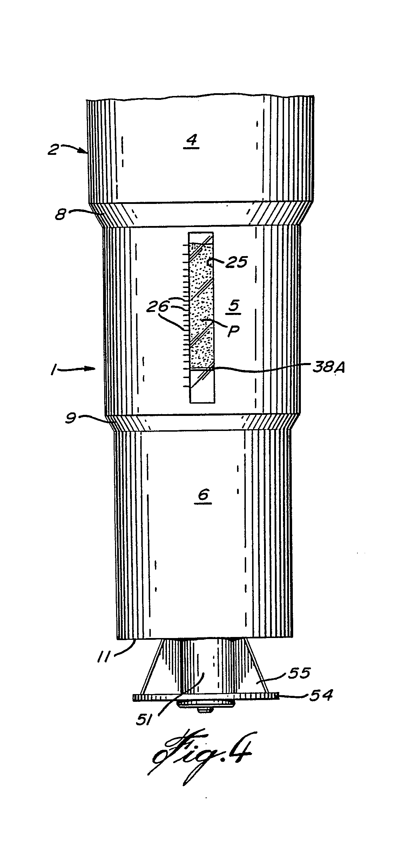

Un désavantage important d'une telle construction est que la plage de volumes possibles est très étroite vu le type d'agencement de soupape. Un autre désavantage est que la poudre viendra qu'à rapidement gêner les deux ressorts 25 et 30 (et plus particulièrement le ressort 25) et donc affecter leur efficacité. Elle peut également avoir un effet contaminant sur la poudre. Par ailleurs, dans la position de la figure 4, où les soupapes 17 et 25 accotent l'une contre l'autre à l'étape finale de distribution de poudre, la poudre peut très bien devenir emprisonnée dans la petite chambre définie par les deux cavités en regard l'une de l'autre dans les soupapes 17 et 25, de sorte que la quantité de poudre tombant au travers l'orifice inférieur 23 peut varier de coup de distribution en coup de distribution. Au surplus, l'orifice supérieur de la chambre étant agrandi par réalésage afin de constituer une surface d'appui pour la soupape supérieure, ceci est désavantageux parce qu'il est susceptible à une usure accélérée.

### BUTS DE L'INVENTION

Le but principal de l'invention ici présente est d'accroître l'efficacité des dispositifs dispensateur de poudre du type pouvant délivrer une quantité variable de poudre.

Un autre but de l'invention est de fournir un tel dispositif avec une chambre de mesure de poudre, le volume intérieur de laquelle peut être précisément ajusté dans une grande plage de variations afin de changer de façon correspondante le volume de poudre distribuée.

Encore un autre but de l'invention est que le dispositif cihaut délivre des quantités rigoureusement constantes de poudre de coup de distribution en coup de distribution.

### SOMMAIRE DE L'INVENTION

Selon l'invention, il est donc proposé un dispositif dispensateur de poudre comprenant: un contenant de poudre, un organe en entonnoir inférieur fixé à la portion inférieure dudit contenant, un organe en entonnoir supérieur installé de façon déplaçable dans ledit contenant audessus dudit organe en entonnoir inférieur coaxialement à celui-ci pour des mouvements de haut vers le bas entre une position limite supérieure et une position limite inférieure, de sorte qu'une chambre de mesure de volume variable soit définie entre ceux-là, lesdits organes en entonnoir inférieur et supérieur formant à leur extrémités inférieures et plus petites un orifice de sortie et un orifice d'admission pour ladite chambre de mesure respectivement, un organe de soupape inférieur et un organe de soupape supérieur installés dans ladite chambre de mesure pour fermer lesdits orifices de sortie et d'admission respectivement; des moyens commandés manuellement, pour ajuster le niveau dudit organe en entonnoir supérieur; ledit organe en entonnoir supérieur ayant un bord supérieur coulissable le long de la surface intérieure dudit contenant; une fenêtre transparente dans la paroi dudit contenant venant vis-à-vis le bord supérieur dudit organe en entonnoir supérieur dans toutes les positions de ce dernier, de sorte que ledit bord supérieur soit apparent de l'extérieur dudit contenant; une tige de poussée installée dans ledit contenant pour des mouvements longitudinaux au travers lesdits orifices et définissant une portion d'extrémité inférieure faisant saillie vers l'extérieur dudit contenant; un organe de contrainte, porté par ladite tige de poussée et contraignant vers le haut ledit organe de soupape supérieur, ledit organe de soupape inférieur étant libre de fermer ledit orifice de sortie par gravité, et un organe d'accotement porté par ladite tige de poussée sous ledit organe de soupape inférieur pour soulever ce dernier pour ouvrir ledit orifice de sortie durant le mouvement vers le haut de ladite tige de poussée, de sorte que lorsque la partie initiale dudit mouvement vers le haut de ladite tige de poussée entre une position limite inférieure dans laquelle ledit organe de soupape inférieur ferme ledit orifice de sortie mais ledit organe de soupape supérieur ouvre ledit orifice d'admission, ledit organe de soupape supérieur est poussé par ledit organe de contrainte pour fermer ledit orifice d'admission, tandis que pour la dernière partie dudit mouvement vers le haut de ladite tige de poussée, effectuée contre la contrainte dudit organe de contrainte, ledit organe d'accotement soulève ledit organe de soupape inférieur pour permettre l'évacuation de la poudre de ladite chambre de mesure.

Préférablement, lesdits organes de soupape comprennent chacun un manchon, ayant une extrémité inférieure élargie vers le bas, chaque manchon entourant ladite tige de poussée, le manchon de l'organe de soupape supérieur entourant le manchon de l'organe de soupape inférieur et ledit organe de contrainte et formant une douille à son extrémité supérieure s'appuyant sur ledit organe de contrainte.

Avantageusement, lesdits moyens pour ajuster le niveau dudit organe en entonnoir supérieur comprend une tige à pas de vis coaxiale à ladite tige de poussée, un manchon allongé solidaire dudit organe en entonnoir supérieur à son extrémité inférieure et mordant dans le pas de vis de ladite tige à pas de vis à son extrémité supérieure; un organe de support supporté par ledit contenant et supportant la portion supérieure d'extrémité de ladite tige à pas de vis, ladite fenêtre constituant des moyens s'insérant sur le bord supérieur dudit entonnoir supérieur pour empêcher la rotation de ce dernier, et des moyens de bouton fixés à l'extrémité supérieure de ladite tige à pas de vis pour tourner celle-ci et donc ajuster le niveau dudit organe en entonnoir supérieur.

Il est souhaitable que l'extrémité inférieure de ladite tige à pas de vis inclut une cavité longitudinale, étant longitudinalement engagée par glissement par une portion d'extrémité supérieure plus petite en coupe de ladite tige de poussée, ladite cavité et ladite portion d'extrémité supérieure étant d'une forme telle qu'elles entraînent en rotation ladite tige de poussée par ladite tige à pas de vis, ladite tige de poussée ayant le même pas de vis que ladite tige à pas de vis, un écrou mordant dans le pas de vis de ladite tige de poussée et utilisé comme surface d'appui pour ledit organe de contrainte et engageant de façon non tournante mais déplaçable longitudinalement par rapport au manchon de l'organe de soupape supérieur, et des moyens pour empêcher la rotation dudit écrou, de sorte que la rotation de ladite tige à pas de vis pour ajuster le niveau dudit organe en entonnoir supérieur ajustera concomittamment le niveau dudit organe en entonnoir supérieur de façon correspondante par la rotation de ladite tige de poussée par rapport audit écrou.

Profitablement l'on prévoit que ledit organe en entonnoir inférieur ait une portion tubulaire inférieure, et comprenant au surplus un agencement de poussée comprenant un tube entourant et ancré à ladite tige de poussée sous ledit organe de soupape inférieur, ledit tube ayant au moins trois rebords longitudinaux faisant saillie vers l'extérieur radialement dudit tube et guidés par ladite portion tubulaire, le bord supérieur de chacun de ces rebords étant biseauté pour se conformer à la forme de l'extrémité élargie dudit organe de soupape inférieur, lesdits bords supérieurs des rebords constituant ledit organe d'accotement.

Préférablement, l'on prévoit une échelle inscrite le long de ladite fenêtre, ledit bord supérieur dudit entonnoir supérieur formant un indicateur coopérant avec ladite échelle pour permettre une lecture sur ladite échelle révélant le volume de ladite chambre de mesure.

## COURTE DESCRIPTION DES FIGURES DES DESSINS

Les figures 1 à 3 représentent des vues en coupe et en élévation d'un dispensateur de poudre construit selon les principes de l'invention, montrant de façon séquentielle comment les éléments de celui-ci coopèrent durant le coup de distribution de poudre;

La figure 1a est une vue en coupe transversale de l'agencement dispensateur de poudre, selon la ligne 1a-1a de la figure 1; et

La figure 4 est une vue partielle en élévation de la moitié inférieure du dispensateur de poudre, selon la ligne 4-4 de la figure 1, et montrant l'échelle et la fenêtre indiquant le volume ajusté de la chambre de mesure de même que s'il reste de la poudre dans le contenant.

## DESCRIPTION DETAILLEE DES REALISATIONS DE L'INVENTION

Le dispensateur de poudre 1 comprend un boîtier allongé tubulaire 2 définissant quatre parties 3 à 6, de diamètres progressivement décroissants. Trois décalés intérieurs 7 à 9 sont donc définis entre les triplets de paires des parties 3-4, 4-5 et 5-6, respectivement. La bouche supérieure 10 de la plus haute partie 3 est à peu près 50 % plus grande de diamètre que la bouche inférieure 11 de la section inférieure 6. A partir du décalé le plus bas 9, un organe inférieur en forme d'entonnoir 12 fait saillie vers l'intérieur, définissant une section conique 13 solidaire du décalé 9 et ayant la même pente, et une section tubulaire 14 coaxiale aux parties 3 à 6 de boîtier et environ trois fois plus petit en diamètre que la bouche du bas 11 et dont la bouche 14a passe au-delà de la bouche 11. Un crochet de support 15 en deux sections sert à immobiliser de façon amovible le boîtier 2 en position droite sur un mur. La section extérieure 16 est vissée au mur alors que la section intérieure 17, solidaire au boîtier 2, coulisse verticalement dans la section extérieure 16. L'on prévoit un couvercle semi-sphérique en forme de dôme, 18, pour fermer la bouche supérieure 10. Le couvercle 18 comprend un rebord périphérique 19 tourné radialement vers l'extérieur et formant un conduit ouvert annulaire orienté vers le bas destiné à engager de façon amovible le bord circulaire supérieur de la bouche 10, afin de la fermer. Le couvercle 18 comprend au surplus un orifice central 22 à sa base, habituellement fermé par un bouchon hermétique 23. Le rebord de couvercle 19 définit aussi une surface d'appui supérieure annulaire 24 sur le côté opposé du conduit 20, de sorte qu'en tirant le bouchon 23 hors du couvercle 18 et le couvercle 18 hors du boîtier 2, et en renversant le couvercle 18, ce dernier peut devenir un organe en entonnoir en faisant s'accoter le rebord de surface d'appui 24 contre ledit bord supérieur circulaire de bouche 10 de la partie 3 du boîtier. Le couvercle 18 permet un remplissage plus aisé du boîtier 2.

Un entonnoir supérieur 38 ajustable verticalement est situé dans la partie 5. La partie de boîtier 2 au-dessus de l'entonnoir 38 forme une chambre de storage destinée à emmagasiner des matériaux granulaires, secs, à écoulement libre tels que de la poudre P (voir la figure 4). Une fenêtre longitudinale rectangulaire 25 est fournie dans la paroi de la partie 5 du boîtier, sur le côté opposé au crochet de support 15 et immédiatement au-dessus de l'entonnoir inférieur 13. La fenêtre 25 est faite de matériau transparent et comprend une échelle longitudinale de calibrage 26, laquelle peut s'étendre de 0 à 28 onces. L'on peut voir le niveau de poudre restant dans la partie 5 du boîtier au travers la fenêtre 25 afin de donner une indication de la nécessité de remplissage. Plus particulièrement, le bord supérieur 38A de l'entonnoir ajustable 38 est vu au travers la fenêtre 25 et révèle par lecture de l'échelle graduée 26 le volume de poudre P dans la chambre de mesure 65 définie entre l'entonnoir inférieur 13 et l'entonnoir supérieur 38.

L'on remarquera que la fenêtre transparente 25 est droite en coupe transversale et que le bord supérieur 38A de l'entonnoir 38 forme une cavité afin de recevoir et de retenir la fenêtre 25. Donc, l'entonnoir 38 peut coulisser de haut en bas le long de la fenêtre 25 mais ne peut pas tourner dans le boîtier 2.

Un organe de support 27 est installé dans la partie 3 du boîtier 2, définissant une paroi annulaire 28 demeurant sur le décalé et laquelle peut être rivetée à la partie 3. Quatre pattes radiales 29 sont fixées à la paroi 28 et supportent à leur tour un tube vertical 30. Le tube 30 est coaxial au boîtier 2 et s'étend vers le bas sur plus de la moitié de la longueur de la partie 4 de boîtier. Le tube 30 a un manchon supérieur guide-tige, 31, au travers lequel passe de façon tournante la partie supérieure sans pas de vis de la tige à pas de vis 32, à l'extrémité supérieure de laquelle est ancré un bouton creux tourné vers l'extérieur, 33, grâce à une goupille de barrure 34. Le bouton 33 sert à tourner la tige 32 et à suspendre celle-ci à partir du dessus du tube 30. Une goupille de barrure 34a, sous une rondelle, engage la tige 32 et empêche de tirer vers le haut la tige 32 par rapport au manchon guide 31.

Un manchon 35 est installé par glissement par son extrémité supérieure dans le tube 30, et comprend un rebord annulaire tourné vers l'intérieur 36 à son extrémité supérieure définissant un court manchon 37, orienté vers le bas et à pas de vis tourné vers l'intérieur, pour mordre dans le pas de vis de la tige 32. Le manchon 35 s'étend vers le bas sur environ la moitié de la longueur totale du dispensateur 1, et supporte à sa section inférieure l'entonnoir supérieur 38 au moyen de bras radiaux 39. Plus précisément, le bord annulaire supérieur 38a de l'entonnoir 38 s'accote librement contre la face intérieure de la section 5 du boîtier, et vient vis-à-vis la fenêtre 25 afin de constituer un indicateur de référence pour l'échelle 26. L'angle des parois de l'entonnoir 38 relativement à l'axe longitudinal du manchon de support 35 fait environ 30°. L'extrémité inférieure du manchon 35 s'arrête à la section intermédiaire de la portion centrale de l'entonnoir 38, de sorte que la poudre P peut s'échapper librement au travers la bouche inférieure 40 de l'entonnoir déplaçable 38 qui est d'un diamètre plus grand d'environ 50 % par rapport au diamètre du manchon 35.

Les pentes de la paroi 13 de l'entonnoir 12 et celles de l'entonnoir 38 devraient être identiques. Le couvercle 18 étant enlevé, en tournant le bouton 33 à la main, l'on peut ajuster la distance relative entre ces deux entonnoirs 12 et 38 en déplaçant l'entonnoir mobile 38 entre une position limite inférieure, dans laquelle l'entonnoir 38 est près de l'entonnoir 12, jusqu'à une position limite supérieure où le rebord supérieur de manchon 36 est près de l'extrémité supérieure du pas de vis de la tige à pas de vis 32, immédiatement au-dessous de la goupille de barrure 34a. Dès lors, un ajustment précis de l'espacement entre les entonnoirs 12 et 38 est possible, et ceci à l'intérieur d'une large plage d'ajustements. Ceci est important tel qu'on pourra le constater plus loin.

L'extrémité inférieure de la tige 32 est fendue afin de définir deux branches 41 qui définissent une cavité intermédiaire 42 généralement de coupe transversale rectangulaire. Les branches 41 sont renforcées par un collier 43 relié à la tige 32 par une clavette transversale 44. La portion supérieure aplatie 45 d'une tige de poussée 46 est engagée par glissement dans la cavité 42. Dès lors, la rotation de la vis d'ajustement d'entonnoir supérieur 32 causera la rotation de la tige de poussé 46 mais celle-ci peut se déplacer axialement par rapport à la vis 32.

La tige de poussée 46 passe coaxialement au boîtier 2 vers le bas au-delà de la bouche inférieure 14a de l'entonnoir 12. La tige de poussée 46 comporte un pas de vis sur toute sa longueur et porte à son extrémité inférieure, via une goupille transversale 47 et une rondelle 48, une tige annulaire de poussée commandant et guidant l'agencement 49 qui consiste en un manchon intérieur 50, un manchon extérieur 51 relié au manchon intérieur 50 par les portions inférieures agrandies 52 des rebords radiaux 53, une plaque annulaire de poussée 54 entourant l'extrémité inférieure du manchon extérieur 51 et renforcée par des bras triangulaires radiaux 55. Le manchon intérieur 52 s'accote à son extrémité supérieure contre une rondelle 56 qui est serrée par un écrou de vissage 57 qui y est superposé et qui est serré sur la tige de poussée 46. Donc, l'agencement 49 est fixé à la tige de poussée 46. Le manchon extérieur 51 s'insère par glissement de son extrémité supérieure autour de la portion tubulaire 14 de l'entonnoir 12. Donc, le manchon extérieur 51 et les rebords 53 guident la tige de poussée 46 dans son mouvement de haut en bas.

L'on prévoit également deux organes de soupape, à savoir un organe de soupape inférieur 58 et un organe de soupape supérieur 59. L'organe de soupape inférieur 58 consiste en un tube entourant par glissement le manchon intérieur, destiné à venir s'accoter contre la rondelle 56 à son extrémité supérieure et formant une portion d'extrémité 60 s'élargissant vers l'extérieur et destinée à s'appuyer contre la gorge 60 de l'entonnoir inférieur 13, ladite gorge formant l'orifice de sortie de la chambre de mesure 65. L'organe de soupape supérieur 59 consiste en un tube qui entoure le tube de l'organe de soupape inférieur 58, l'écrou 57, et s'étend vers le haut pour se terminer par une douille 62 qui s'ajuste à serre avec la tige de poussée 46. Le tube de l'organe de soupape 59 a une portion inférieure d'extrémité 63 s'élargissant vers le bas, laquelle est légèrement courbé afin de s'appuyer vers le haut contre la bouche d'entonnoir 40 qui forme l'orifice d'admission de la chambre de mesure 65.

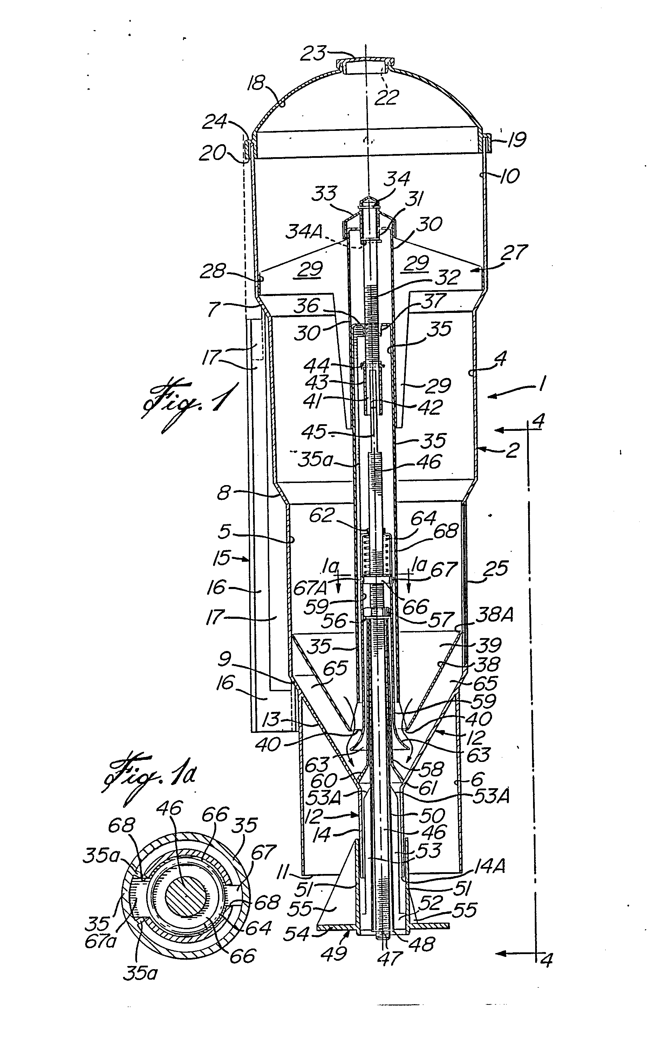

Un ressort en spirale 64 entoure la tige de poussée 46 et s'accote contre la douille 62 de l'organe de soupape supérieur 59 et contre un écrou 66 vissé sur la tige de poussée 46. L'écrou 66 a des oreilles latérales opposées 67, 67a, coulissables dans des ouvertures longitudinales 68 faites dans la partie supérieure du tube de l'organe de soupape supérieur 59. L'oreille plus grande 67a (voir la figure 1a) est aussi insérée entre les deux crêtes longitudinales internes 35a sur le manchon supérieur d'entonnoir 35. Donc, l'écrou 66 et l'organe de soupape 59 sont empêchés de tourné par le manchon 35 qui ne peut tourner parce que l'entonnoir 38 ne peut tourner tel qu'explicité précédemment. Le ressort 64 contraint vers le haut l'organe de soupape supérieur 59 par rapport à la tige de poussée 46, jusqu'à ce que les oreilles 67 s'accotent contre les extrémités inférieures des ouvertures 68. Le pas de vis des tiges 32 et 46 est le même. Lorsqu'on tourne la tige 32 avec le bouton 33 pour ajuster le niveau de l'entonnoir supérieur 38, la tige de poussée 46 se visse vers le haut ou vers le bas dans l'écrou 66 selon un rapport correspondant de sorte que l'espacement entre l'orifice d'admission 40 et l'extrémité élargie 63 de l'organe de soupape 59 demeure constant.

La figure 1 montre le dispensateur dans une position de repos avec la soupape inférieure 58, 60 fermant l'orifice de sortie 61 et l'organe de soupape supérieur 59, 63 ouvrant l'orifice d'admission 40. L'on remarquera que le niveau de l'entonnoir supérieur 38 et de l'organe de soupape supérieur 59, 63, peut varier à l'unité alors que l'agencement de poussée 49 reste au même niveau pour la commodité de l'usager.

Chaque rebord 53 de l'agencement de poussée 49 définit un bord supérieur 53a biseauté vers l'extérieur et vers le bas, destiné à s'accoupler avec l'intérieur de l'extrémité inférieure élargie 60 de l'organe de soupape inférieur 58. A la position de repos, les bords 53a sont espacés au bas de l'extrémité inférieure 60 de la soupape.

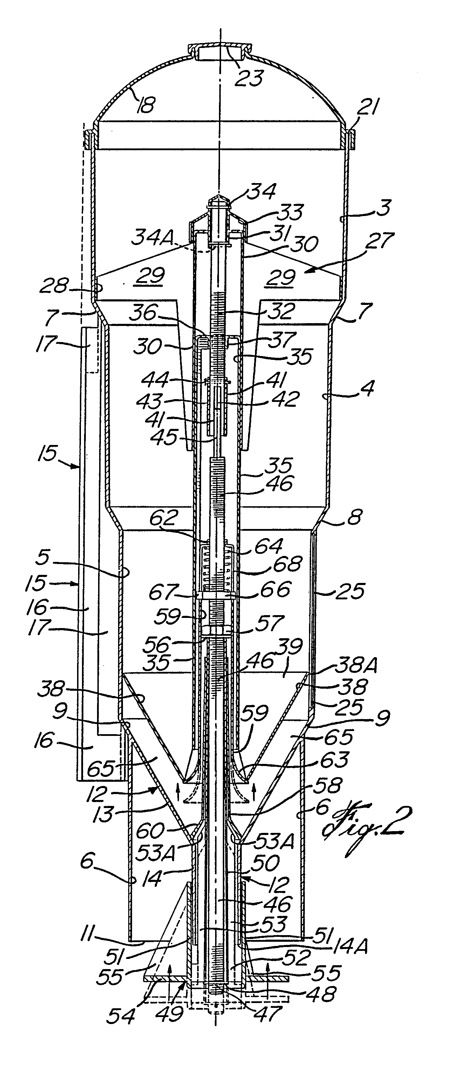

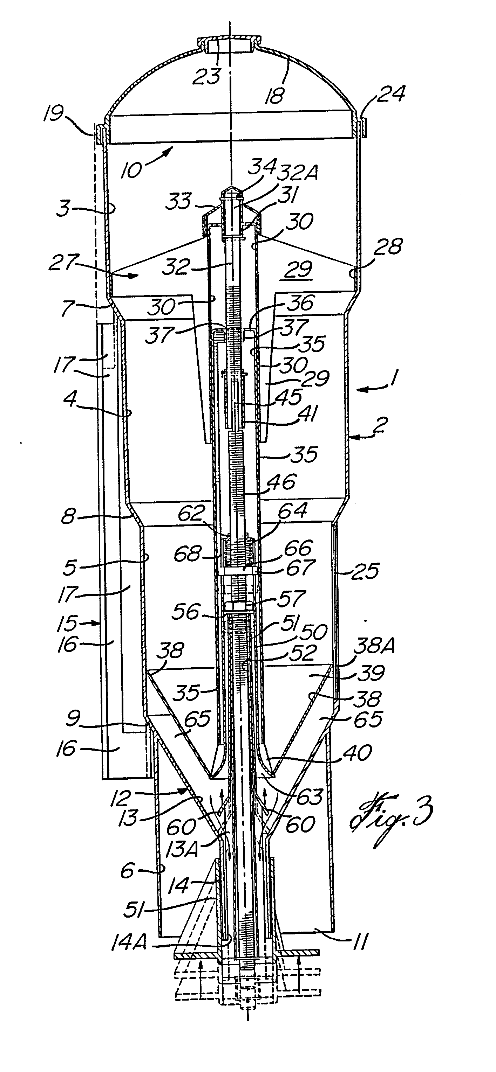

Lors de son emploi, le dispensateur 1 est normalement en position de repos montrée à la figure 1, avec un organe de soupape supérieur 63 étant ouvert pour l'admission de matériau de la chambre de storage 65, alors que l'organe de soupape inférieur 58, 60 est fermé par gravité, sous son propre poids et sous celui de la tige de poussée 46 et de l'agencement 49. Sous l'impulsion initiale vers le haut de l'agencement de poussée 49 et de la tige de poussée 46, voir figure 2, l'organe de poussée inférieur 58, 60 reste fermé sous son propre poids et sous celui de la poudre P dans la chambre de mesure 65 alors que l'écrou 66 et le ressort 64 poussent l'organe de soupape supérieur 59, 63 à la position de fermeture de l'orifice d'admission. Un déplacement ultérieur vers le haut de l'agencement de poussée 49 et de la tige de poussée 46 (figure 3) entraînera la compression du ressort 64 afin de fermer hermétiquement l'orifice d'admission, et les bords 53a des rebords 53 s'insèrent sur l'organe de soupape inférieur 58, 60 et le soulèvent, à la position ouverte de sorte que la poudre P de la chambre de mesure 65 est dispensée au travers la portion tubulaire 14 et le manchon extérieur 51 de l'agencement 49. Après le relâchement de l'agencement de poussée 49, l'on retourne à la position de repos de la figure 1.

Ce dispensateur de poudre est particulièrement utile dans les fermes laitières et pour l'industrie du produit laitier en général, où les détergents en poudre et les agents microbicides doivent être mélangés et dissous dans l'eau en proportions définies afin de fournir une solution de lavage pour les réceptacles et les appareils. Une autre application consiste en le déversement de quantités spécifiques de poudres bactéricides dans l'eau d'une piscine, à intervalles réguliers comme il est bien connu.

L'invention en question concerne donc spécifiquement un dispensateur à poudre ayant une chambre de mesure et caractérisé en ce que le dispensateur libèrera une quantité précisément contrôlée de poudre pour chaque coup de distribution du dispensateur, et au surplus que le volume de la chambre de mesure peut être très précisément ajusté à la main.

**Revendications**

1. Un dispositif dispensateur de poudre comprenant: un contenant de poudre, un organe en entonnoir inférieur fixé à la portion inférieur dudit contenant, un organe en entonnoir supérieur installé de façon déplaçable dans ledit contenant au-dessus dudit organe en entonnoir inférieur coaxialement à celui-ci pour des mouvements de haut en bas entre une position limite supérieure et une position limite inférieure, de sorte qu'une chambre de mesure de volume variable soit définie entre ceux-là, lesdits organes en entonnoir inférieur et supérieur formant respectivement à leur extrémités inférieures plus petites un orifice de sortie et un orifice d'admission pour ladite chambre de mesure, un organe de soupape inférieur et un organe de soupape supérieur étant installés dans ladite chambre de mesure pour respectivement fermer lesdits orifices de sortie et d'admission; des moyens commandés manuellement, pour ajuster le niveau dudit organe en entonnoir supérieur; ledit organe en entonnoir supérieur ayant un bord supérieur coulissable le long de la surface intérieure dudit contenant; une fenêtre transparente dans la paroi dudit contenant venant vis-à-vis le bord supérieur dudit organe en entonnoir supérieur dans toutes les positions de ce dernier, de sorte que ledit bord supérieur soit visible de l'extérieur dudit contenant; une tige de poussée installée dans ledit contenant pour des mouvements longitudinaux au travers lesdits orifices et définissant une portion d'extrémité inférieure faisant saillie vers l'extérieur dudit contenant; un organe de contrainte, porté par ladite tige de poussée et contraignant vers le haut ledit organe de soupape supérieur, ledit organe de soupape inférieur étant libre de fermer ledit orifice de sortie par gravité, et un organe d'accotement porté par ladite tige de poussée sous ledit organe de soupape inférieur pour soulever ce dernier pour ouvrir ledit orifice de sortie durant le mouvement vers le haut de ladite tige de poussée, de sorte que lorsque la partie initiale dudit mouvement vers le haut de ladite tige de poussée entre une position limite inférieure dans laquelle ledit organe de soupape inférieur ferme ledit orifice de sortie mais ledit organe de soupape supérieur ouvre ledit orifice d'admission, ledit organe de soupape supérieur est poussé par ledit organe de contrainte à fermer ledit orifice d'admission, tandis que pour la dernière partie dudit mouvement vers le haut de ladite tige de poussée, effectuée contre la contrainte dudit organe de contrainte, ledit organe d'accotement soulève ledit organe de soupape inférieur pour permettre l'évacuation de la poudre de ladite chambre de mesure.

2. Un dispositif tel que défini à la revendication 1,
caractérisé en ce que lesdits organes de soupape comprennent chacun un manchon, ayant une extrémité inférieure élargie vers le bas, chaque manchon entourant ladite tige de poussée, le manchon de l'organe de soupape supérieur entourant le manchon de l'organe de soupape inférieur et ledit organe de contrainte et formant une douille à son extrémité supérieure s'appuyant sur ledit organe de contrainte.

3. Un dispositif tel que défini à la revendication 2,
caractérisé en ce que lesdits moyens pour ajuster le niveau dudit organe en entonnoir supérieur comprennent une tige à pas de vis coaxiale à ladite tige de poussée, un manchon allongé solidaire dudit organe en entonnoir supérieur à son extrémité inférieure et mordant dans le pas de vis de ladite tige à pas de vis à son extrémité supérieure; un organe de support porté par ledit contenant et supportant la portion supérieure d'extrémité de ladite tige à pas de vis, ladite fenêtre constituant des moyens s'insérant sur le bord supérieur dudit entonnoir supérieur pour empêcher la rotation de ce dernier, et des moyens de bouton fixés à l'extrémité supérieure de ladite tige à pas de vis pour tourner celle-ci et donc ajuster le niveau dudit organe en entonnoir supérieur.

4. Un dispositif tel que défini à la revendication 3, caractérisé en ce que l'extrémité inférieure de ladite tige à pas de vis inclut une cavité longitudinale, étant longitudinalement engagée par glissement par une portion d'extrémité supérieure plus petite en coupe de ladite tige de poussée, ladite cavité et la portion d'extrémité supérieure étant d'une forme telle qu'elles entraînent en rotation ladite tige de poussée par ladite tige à pas de vis, ladite tige de poussée ayant le même pas de vis que ladite tige à pas de vis, un écrou mordant dans le pas de vis de ladite tige de poussée et utilisé comme surface d'appui pour ledit organe de contrainte et engageant de façon non tournante le manchon de l'organe de soupape supérieur mais déplaçable longitudinalement par rapport à celui-ci, et des moyens pour empêcher la rotation dudit écrou, de sorte que la rotation de ladite tige à pas de vis pour ajuster le niveau dudit organe en entonnoir supérieur ajustera concomittamment le niveau dudit organe en entonnoir supérieur de façon correspondante par la rotation de ladite tige de poussée par rapport audit écrou.

5. Un dispositif tel que défini à la revendication 4, caractérisé en ce que ledit organe en entonnoir inférieur a une portion tubulaire inférieure, et comprenant au surplus un agencement de poussée comprenant un tube entourant et ancré à ladite tige de poussée sous ledit organe de soupape inférieur, ledit tube ayant au moins trois rebords longitudinaux faisant saillie vers l'extérieur radialement dudit tube et guidés par ladite portion tubulaire, le bord supérieur de chacun de ces rebords étant biseauté pour se conformer à la forme de l'extrémité élargie dudit organe de soupape inférieur, lesdits bords supérieurs des rebords constituant ledit organe d'accotement.

6. Un dispositif tel que défini à la revendication 1, comprenant au surplus une échelle inscrite le long de ladite fenêtre, ledit bord supérieur dudit entonnoir supérieur formant un indicateur de référence coopérant avec ladite échelle pour permettre une lecture sur ladite échelle révélant le volume de poudre de ladite chambre de mesure.

EP 0 296 632 A2

Fig. 1

Fig. 1a

Fig.2

*Fig. 3*

*Fig.4*